(19) Europäisches Patentamt / European Patent Office / Office européen des brevets

(11) **EP 2 893 308 B1**

(12) **FASCICULE DE BREVET EUROPEEN**

(45) Date de publication et mention
de la délivrance du brevet:
**05.10.2016 Bulletin 2016/40**

(21) Numéro de dépôt: **13745453.4**

(22) Date de dépôt: **11.07.2013**

(51) Int Cl.:
***G01G 19/08*** *(2006.01)*

(86) Numéro de dépôt international:
**PCT/FR2013/051667**

(87) Numéro de publication internationale:
**WO 2014/037636 (13.03.2014 Gazette 2014/11)**

(54) **PROCÉDÉ DE DÉTERMINATION DE LA MASSE D'UN VÉHICULE ET VÉHICULE CORRESPONDANT**

VERFAHREN ZUR BESTIMMUNG DER MASSE EINES FAHRZEUGS UND ENTSPRECHENDES FAHRZEUG

METHOD OF DETERMINING THE MASS OF A VEHICLE AND CORRESPONDING VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2012 FR 1258332**

(43) Date de publication de la demande:
**15.07.2015 Bulletin 2015/29**

(73) Titulaire: **Renault S.A.S.**
**92100 Boulogne-Billancourt (FR)**

(72) Inventeurs:
• **PITA-GIL, Guillermo**
**F-75017 Paris (FR)**
• **GENEBRIER, Arnaud**
**F-78100 Saint Germain En Laye (FR)**

(56) Documents cités:
**US-A- 4 691 792**

**Description**

L'invention concerne l'estimation de la masse d'un véhicule, en particulier un véhicule situé sur voie ayant une pente ou un dévers non-nul, comme p.ex. décrit dans le document US 4 691 792.

Pour certains véhicules, par exemple les véhicules utilitaires, il est nécessaire de déterminer précisément la masse du véhicule. En effet, il convient en général de ne pas dépasser une valeur prédéfinie dite de poids total autorisé en charge (PTAC). Des marges d'erreurs autorisées pour la détermination de la masse sont généralement utilisées. Par exemple, la marge d'erreur autorisée peut être de 5%. Il est néanmoins préférable d'obtenir des marges d'erreurs plus faibles.

Lorsque le véhicule est placé avec un frein à main engagé sur une voie en pente ou en dévers, les moyens utilisés pour mesurer la masse ne sont plus utilisables, ou seulement pour des angles de faible valeur. En effet, les trains arrière de véhicule génèrent des efforts sur les suspensions dès lors qu'une force longitudinale (c'est-à-dire un couple) est appliquée sur les roues. Une pente engendre sur le train arrière une telle force qui est proportionnelle à la valeur du dénivelé. En outre, les variations de pression et l'usure des pneumatiques sur un véhicule automobile peuvent engendrer des variations de hauteur qui faussent les mesures.

On peut noter que les moyens actuels de mesure qui ne prennent pas en compte les pentes et les dévers peuvent fournir des mesures avec des erreurs pouvant dépasser la centaine de kilogrammes. Par exemple, la marge d'erreur de 5% peut être dépassée dès 3° pour toute charge du véhicule (à vide ou en charge).

L'invention a donc pour but de fournir une valeur de masse plus précise pour un véhicule sur une voie en pente ou en dévers, et notamment dans les marges d'erreur autorisée.

Selon un aspect, il est proposé un procédé de détermination de la masse d'un véhicule muni d'un train avant et d'un train arrière, le procédé comprenant une mesure de l'angle de la pente de la voie sur laquelle est le véhicule, une mesure de l'angle de dévers de ladite voie, une mesure de la force verticale exercée sur le train avant du véhicule et sur le train arrière du véhicule.

Selon une caractéristique générale, le procédé comprend :

- un calcul d'un premier paramètre égal à la somme de la somme de la force verticale exercée sur le train avant et de la force verticale exercée sur le train arrière,
- un calcul d'un deuxième paramètre représentatif de la voie à partir de l'angle de la pente de la voie mesuré, de l'angle de dévers mesuré et d'un coefficient correspondant aux forces horizontales transmises sur le train arrière, et
- une division du premier paramètre par le deuxième paramètre pour en déduire la masse du véhicule.

On met ainsi en oeuvre un calcul qui prend en considération à la fois la pente et le dévers, mais également les efforts sur le train arrière. L'invention est particulièrement adaptée à la détermination de la masse d'un véhicule dont le frein à main est enclenché sur une voie en pente et en dévers.

Le procédé peut comprendre un calcul de la somme de la force verticale exercée sur le train avant et de la force verticale exercée sur le train arrière (c'est-à-dire le premier paramètre), et une division de la somme par le produit de l'accélération gravitationnelle, du cosinus de l'angle de dévers et de la différence du cosinus de l'angle de dévers et du sinus de l'angle de la pente, l'angle de la pente étant affecté d'un coefficient correspondant aux forces horizontales transmises sur le train arrière (c'est-à-dire le deuxième paramètre). Le coefficient K représente l'effet bien connu de l'homme du métier sous le nom d'effet Brouilhet. Le coefficient K peut par exemple être obtenu lors d'une étape préalable de calibration comprenant une simulation numérique, ou une mesure sur un véhicule. On pourra utiliser le logiciel ADAMS de la société américaine MSC SOFTWARE pour mettre en oeuvre des simulations numériques.

On peut mesurer l'angle de la pente de la voie au moyen d'un accéléromètre longitudinal et on mesure l'angle de dévers de la voie au moyen d'un accéléromètre transversal. Les accéléromètres peuvent fournir des valeurs d'accélération dues à la pente ou au dévers pour en déduire la valeur de la pente ou du dévers.

On peut mesurer la force verticale exercée sur le train avant et on mesure la force verticale exercée sur le train arrière au moyen de capteurs de débattement et/ou de capteurs à ultrasons. Par exemple, pour un véhicule automobile, il est possible de placer quatre capteurs de débattement ou à ultrasons entre le train et la caisse du véhicule au voisinage de chaque roue. On peut déduire des informations issues des capteurs les forces verticales exercées sur les trains arrière et avant.

Le véhicule peut être un véhicule automobile ou une voiture de train ou un chariot ou un appareil de levage. L'invention est adaptée à tout véhicule dont la liaison au sol est effectuée par l'intermédiaire d'un amortisseur à ressort, ce qui permet notamment de mesurer le débattement et d'en déduire une valeur de force.

Selon un autre aspect, il est proposé un véhicule comprenant un train avant et un train arrière, des moyens de mesure de l'angle de la pente de la voie sur laquelle est le véhicule, des moyens de mesure de l'angle de la dévers de ladite voie, des moyens de mesure de la force verticale exercée sur le train avant du véhicule et sur le train arrière du véhicule

Selon une caractéristique générale, le véhicule comprend une unité de calcul pour calculer :

- un premier paramètre égal à la somme de la somme de la force verticale exercée sur le train avant et de la force verticale exercée sur le train arrière,

- un deuxième paramètre représentatif de la voie à partir de l'angle de la pente de la voie mesuré, de l'angle de dévers mesuré et d'un coefficient correspondant aux forces horizontales transmises sur le train arrière, et

- une division du premier paramètre par le deuxième paramètre pour en déduire la masse du véhicule.

L'unité de calcul peut être par exemple une unité de commande électronique apte à communiquer avec un ensemble de capteurs par l'intermédiaire d'un réseau de communication bien connu de l'homme du métier sous l'acronyme anglo-saxon « CAN : Controller Area Network ».

L'unité de calcul peut être apte à calculer la somme de la force verticale exercée sur le train avant et de la force verticale exercée sur le train arrière, et une division de la somme par le produit de l'accélération gravitationnelle, du cosinus de l'angle de dévers et de la différence du cosinus de l'angle de dévers et du sinus de l'angle de la pente, l'angle de la pente étant affecté d'un coefficient correspondant aux forces horizontales transmises sur le train arrière.

Les moyens de mesure de l'angle de la pente de la voie comprennent un accéléromètre longitudinal et les moyens de mesure de l'angle de dévers de la voie comprennent un accéléromètre transversal.

Les moyens de mesure de la force verticale exercée sur le train avant et les moyens de mesure de la force verticale exercée sur le train arrière comprennent des capteurs de débattement et/ou des capteurs à ultrasons.

Le véhicule peut être un véhicule automobile ou une voiture de train ou un chariot ou un appareil de levage.

D'autres buts, caractéristiques et avantages apparaîtront à la lecture de la description suivante donnée uniquement en tant qu'exemple non limitatif et faite en référence aux dessins annexés sur lesquels :

- la figure 1 décrit de manière schématique différentes étapes d'un mode de mise en oeuvre selon l'invention, et

- les figures 2 à 4 illustrent schématiquement différentes positions d'un véhicule et les forces qui s'appliquent sur ce véhicule.

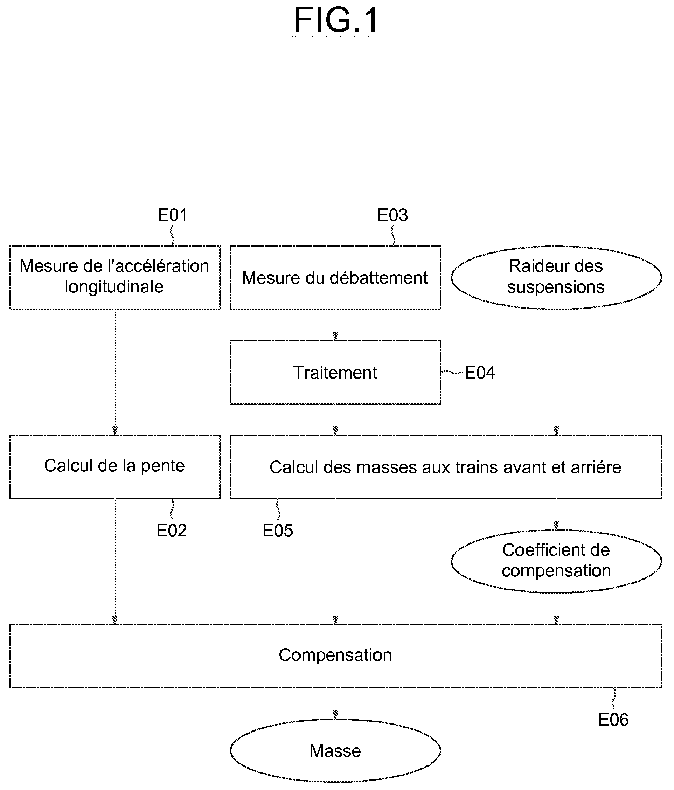

Sur la figure 1, on a représenté schématiquement différentes étapes d'un procédé d'estimation de la masse d'un véhicule placé sur une voie en pente avec un frein à main enclenché. Dans une première étape E01, on mesure l'accélération longitudinale, par exemple au moyen d'un accéléromètre embarqué dans le véhicule. L'accélération mesurée peut fournir après un calcul une valeur de pente (étape E02), par exemple une valeur d'angle en degré.

Une mesure du débattement est également mise en oeuvre (étape E03), par exemple au moyen de quatre capteurs de débattement ou de quatre capteurs à ultrasons situés entre le train et la caisse du véhicule au voisinage de chaque roue pour un véhicule à quatre roues. Un traitement supplémentaire (étape E04) peut être mis en oeuvre pour transformer les signaux obtenus en sortie des capteurs de débattement (par exemple des signaux électriques) en valeur numérique de débattement, c'est-à-dire un écart.

On peut ensuite calculer les valeurs des masses au train avant et au train arrière (étape E05) en utilisant à la fois les valeurs de débattement mesurées et la valeur de raideur des suspensions (obtenues préalablement par exemple par une étape de calibration). En effet, on peut obtenir les valeurs des forces exercées sur les trains avant et arrière avec un calcul de valeur de force à partir d'un débattement (une variation de distance) et une raideur de ressort des suspensions. On peut dès lors calculer des valeurs de masses au train avant et au train arrière.

Alors que dans l'art antérieur on calcule la masse du véhicule directement à partir des masses calculées pour le train avant et le train arrière, l'invention permet d'améliorer la précision du calcul en prenant en considération la valeur de la pente obtenue à l'étape E02, et également de calculer un coefficient de compensation correspondant aux forces horizontales transmises sur le train arrière.

On peut ainsi mettre en oeuvre l'étape E06 dans laquelle la masse est calculée en appliquant une correction prenant en considération la valeur de la pente et les forces horizontales transmises sur le train arrière.

Bien entendu, il est également possible de prendre en considération la valeur du dévers comme indiqué ci-après.

Les étapes E01 à E06 peuvent être mises en oeuvre par des capteurs aptes à communiquer avec une unité de calcul, par exemple une unité de commande électronique. Le protocole « CAN » peut être utilisé.

On peut également noter que d'autres informations obtenues par le protocole « CAN » peuvent être utilisées pour contrôler la mise en oeuvre du procédé. Par exemple, si aucun frein à main n'est enclenché, si la vitesse du véhicule n'est pas nulle ou si un rapport est engagé, le coefficient de compensation est fixé égal à zéro. En outre, si un groupe motopropulseur du véhicule est à l'arrêt et que le contact électrique du véhicule est enclenché, on peut mettre en oeuvre le procédé selon l'invention.

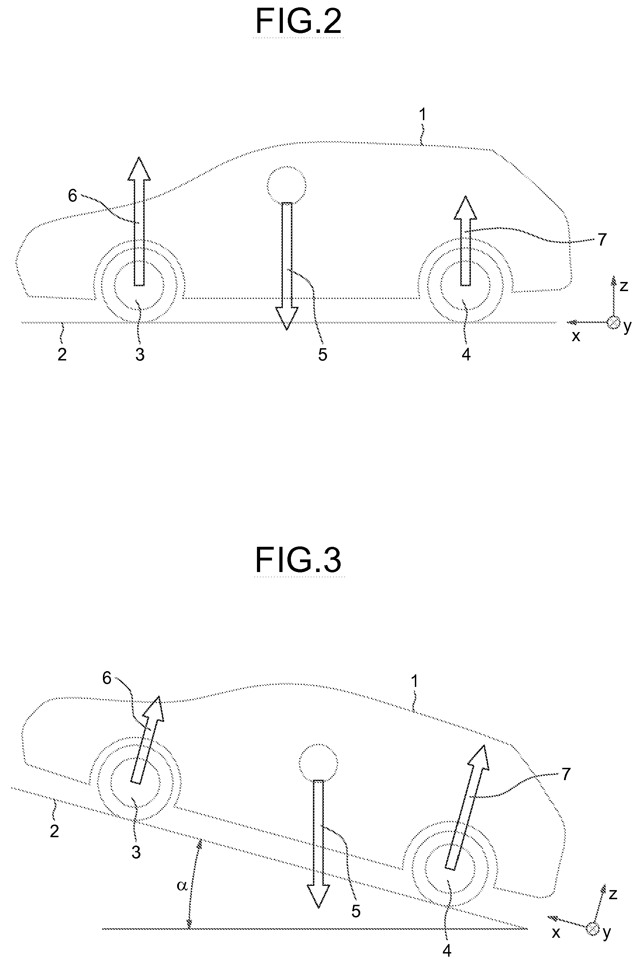

Sur la figure 2, on a représenté un véhicule automobile 1 de profil situé sur une voie 2 plane, c'est-à-dire avec une pente et un dévers nul. Un repère est représenté sur la figure 2 et comporte trois axes X, Y et Z. Le véhicule comprend un train avant muni de deux roues 3 et un train arrière muni de deux roues 4. Le poids du véhicule est représenté par une flèche 5 vers le bas dans la direction de l'axe Z.

La force exercée sur le train avant est représentée par une flèche 6 vers le haut dans la direction de l'axe Z et la force exercée sur le train arrière est représentée par une flèche 7 vers le haut dans la direction de l'axe Z

Sur une voie plane, aucune autre force n'est exercée sur le véhicule.

Comme indiqué précédemment, les forces exercées sur les trains sont obtenues en mesurant les débattements à l'avant et à l'arrière :

$$Fz1 = k1 \times \Delta l1$$

$$Fz2 = k2 \times \Delta l2$$

avec Fz1 la force exercée sur le train avant sur l'axe Z en Newton,

Fz2 la force exercée sur le train arrière sur l'axe Z en Newton,

k1 la constante de raideur des suspensions du train avant, k2 la constante de raideur des suspensions du train arrière,

$\Delta l1$ le débattement mesuré au train avant, et

$\Delta l2$ le débattement mesuré au train arrière.

En appliquant le principe fondamental de la dynamique on obtient la masse du véhicule notée m :

$$m = \frac{Fz1 + Fz2}{g}$$

avec g l'accélération gravitationnelle.

On peut noter qu'aucune compensation des efforts exercés sur le train arrière n'est nécessaire et qu'il n'y a pas de correction à appliquer à cause de la pente ou du dévers.

L'application d'un tel calcul à un véhicule sur une voie en pente ou en dévers fournit un résultat erroné, avec un écart par rapport à la vraie valeur qui dépasse les marges autorisées.

Sur la figure 3, on a représenté le véhicule 1 sur une voie 2 en pente, avec un frein à main engagé. Les éléments identiques à ceux décrits en référence à la figure 2 portent les mêmes références numériques. La pente a ici une valeur notée $\alpha$. L'axe X du repère utilisé pour cette figure est aligné avec la voie.

Ainsi, en mesurant l'angle $\alpha$ avec des capteurs, par exemple des accéléromètres longitudinaux, on peut obtenir une correction du calcul de la masse par rapport à celui obtenue pour une voie plane :

$$m = \frac{Fz1 + Fz2}{g \times \cos(\alpha)}$$

Cela étant, une telle correction ne prend pas en considération les efforts horizontaux exercés sur le train arrière. Ce résultat peut toutefois être correct dans le cas d'un véhicule 1 sur une voie en pente avec un frein à main engagé et un rapport de vitesse engagé.

Si aucun rapport de vitesse n'est engagé, la force Fz2 s'écrit :

$$Fz2 = k2 \times \Delta l2 + K \times Fx2$$

avec K un coefficient de compensation, et
Fx2 la force horizontale exercée sur le train arrière.
Fx2 correspond à la composante du poids projetée sur l'axe X :
$Fx2 = mg$ x $\sin(\alpha)$

On obtient alors la valeur de la masse :

$$m = \frac{Fz1 + Fz2}{g \times (\cos(\alpha) - \sin(\alpha) \times K)}$$

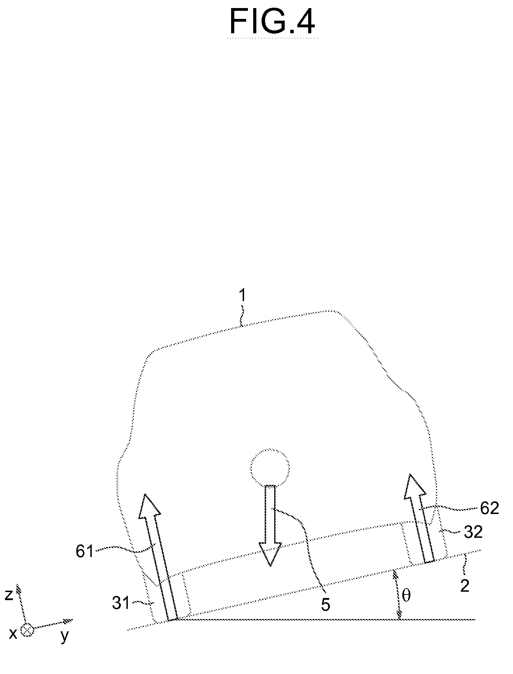

Sur la figure 4, on a représenté le véhicule 1 sur une voie en dévers. La valeur de l'angle de dévers est ici notée $\theta$. Le véhicule 1 est représenté de face et une roue avant droite 31 est visible ainsi qu'une roue avant gauche 32.

On a également représenté les forces exercées sur la roue avant droite 31 (flèche 61) et sur la roue avant gauche 32 (flèche 62). Par ailleurs, l'axe Y est aligné avec la voie sur cette figure.

En projetant le poids du véhicule (flèche 5) sur les axes du repère, on obtient :

$$m = \frac{Fag + Fad + Frg + Frd}{g \times \cos(\theta)} = \frac{Fz1 + Fz2}{g \times \cos(\theta)}$$

avec Fag la force exercée sur la roue avant gauche,
Fad la force exercée sur la roue avant droite,
Frg la force exercée sur la roue arrière gauche, et
Frd la force exercée sur la roue arrière droite.

En utilisant les résultats obtenus en se référant aux figures 2 à 4, il est possible d'obtenir la formule correspondant à la masse pour un véhicule sur une voie quelconque, c'est-à-dire avec une pente et/ou un dévers. On obtient alors une formule suivante applicable pour toute voie :

$$m = \frac{Fz1 + Fz2}{g \times \cos(\theta) \times (\cos(\alpha) - K \sin(\alpha))}$$

Ce calcul de masse peut être mise en oeuvre par une unité de calcul à partir des informations obtenues par des capteurs du véhicule.

Avec l'invention, on obtient une détermination de la masse plus précise que celle de l'art antérieur, qui prend en considération la pente et le dévers de la voie sur laquelle le véhicule est placé.

L'invention est particulièrement bien adaptée aux véhicules automobiles mais elle est également applicable à tout véhicule équipé de trains sur des suspensions, par exemple des voitures de train, des charriots ou des appareils de levage.

## Revendications

1. Procédé de détermination de la masse d'un véhicule (1) muni d'un train avant et d'un train arrière, le procédé comprenant une mesure de l'angle de la pente (α) de la voie (2) sur laquelle est le véhicule, une mesure de l'angle de dévers (θ) de ladite voie, une mesure de la force verticale exercée sur le train avant du véhicule (Fz1) et sur le train arrière du véhicule (Fz2), **caractérisé en ce qu'**il comprend :

   - un calcul d'un premier paramètre égal à la somme de la force verticale exercée sur le train avant et de la force verticale exercée sur le train arrière,
   - un calcul d'un deuxième paramètre représentatif de la voie à partir de l'angle de la pente de la voie mesuré, de l'angle de dévers mesuré et d'un coefficient selon l'effet Brouilhet, correspondant aux forces horizontales transmises sur le train arrière, et
   - une division du premier paramètre par le deuxième paramètre pour en déduire la masse du véhicule.

2. Procédé selon la revendication 1, comprenant le calcul de la somme de la force verticale exercée sur le train avant et de la force verticale exercée sur le train arrière, et une division de la somme par le produit de l'accélération gravitationnelle, du cosinus de l'angle de dévers (θ) et de la différence du cosinus et du sinus de l'angle de la pente (α), le sinus étant affecté d'un coefficient correspondant aux forces horizontales transmises sur le train arrière.

3. Procédé selon la revendication 1 ou 2, dans lequel on mesure l'angle de la pente (α) de la voie au moyen d'un accéléromètre longitudinal et on mesure l'angle de dévers (θ) de la voie au moyen d'un accéléromètre transversal.

4. Procédé selon l'une quelconque des revendications précédentes, dans lequel on mesure la force verticale exercée sur le train avant (Fz1) et on mesure la force verticale exercée sur le train arrière (Fz2) au moyen de capteurs de débattement et/ou de capteurs à ultrasons.

5. Procédé selon l'une quelconque des revendications précédentes, dans lequel le véhicule est un véhicule automobile ou une voiture de train ou un chariot ou un appareil de levage.

6. Véhicule comprenant un train avant et un train arrière, des moyens de mesure de l'angle de la pente (α) de la voie sur laquelle est le véhicule, des moyens de mesure de l'angle de dévers (θ) de ladite voie, des moyens de mesure de la force verticale exercée sur le train avant du véhicule (Fz1) et sur le train arrière du véhicule (Fz2), **caractérisé en ce qu'**il comprend une unité de calcul pour calculer :

   - un premier paramètre égal à la somme de la force verticale exercée sur le train avant et de la force verticale exercée sur le train arrière,
   - un deuxième paramètre représentatif de la voie à partir de l'angle de la pente de la voie mesuré, de l'angle de dévers mesuré et d'un coefficient (K) correspondant aux forces horizontales transmises sur le train arrière, et
   - une division du premier paramètre par le deuxième paramètre pour en déduire la masse du véhicule.

7. Véhicule selon la revendication 6, dans lequel l'unité de calcul est apte à calculer la somme de la force verticale exercée sur le train avant et de la force verticale exercée sur le train arrière, et une division de la somme par le produit de l'accélération gravitationnelle, du cosinus de l'angle de dévers et de la différence du cosinus de l'angle de dévers et du sinus de l'angle de la pente, l'angle de la pente étant affecté d'un coefficient correspondant aux forces horizontales transmises sur le train arrière.

8. Véhicule selon la revendication 6 ou 7, dans lequel les moyens de mesure de l'angle de la pente (α) de la voie comprennent un accéléromètre longitudinal et les moyens de mesure de l'angle de dévers (θ) de la voie comprennent un accéléromètre transversal.

9. Véhicule selon l'une quelconque des revendications 6 à 8, dans lequel les moyens de mesure de la force verticale exercée sur le train avant (Fz1) et les moyens de mesure de la force verticale exercée sur le train arrière (Fz2) comprennent des capteurs de débattement et/ou des capteurs à ultrasons.

10. Véhicule selon l'une quelconque des revendications 6 à 9, dans lequel le véhicule est un véhicule automobile ou une voiture de train ou un chariot ou un appareil de levage.

**Patentansprüche**

1. Verfahren zur Bestimmung der Masse eines Fahrzeugs (1), das mit einer Vorderachse und einer Hinterachse versehen ist, wobei das Verfahren eine Messung des Winkels der Neigung ($\alpha$) der Fahrbahn (2), auf der sich das Fahrzeug befindet, eine Messung des Überhöhungswinkels ($\theta$) der genannten Fahrbahn, eine Messung der vertikalen Kraft, die auf die Vorderachse des Fahrzeugs (Fz1) und auf die Hinterachse des Fahrzeugs (Fz2) ausgeübt wird, umfasst, **dadurch gekennzeichnet, dass** es umfasst:

   - eine Berechnung eines ersten Parameters, der gleich der Summe der auf die Vorderachse ausgeübten vertikalen Kraft und der auf die Hinterachse ausgeübten vertikalen Kraft ist,
   - eine Berechnung eines zweiten Parameters, der die Fahrbahn repräsentiert, ausgehend vom gemessenen Winkel der Neigung der Fahrbahn, dem gemessenen Überhöhungswinkel und einem Koeffizienten nach dem Brouilhet-Effekt, der den auf die Hinterachse übertragenen horizontalen Kräften entspricht, und
   - eine Division des ersten Parameters durch den zweiten Parameter, um daraus die Masse des Fahrzeugs zu ermitteln.

2. Verfahren nach Anspruch 1, umfassend die Berechnung der Summe der auf die Vorderachse ausgeübten vertikalen Kraft und der auf die Hinterachse ausgeübten vertikalen Kraft, und eine Division der Summe durch das Produkt der Gravitationsbeschleunigung, des Cosinus des Überhöhungswinkels ($\theta$) und der Differenz des Cosinus und des Sinus des Winkels der Neigung ($\alpha$), wobei dem Sinus ein Koeffizient, der den auf die Hinterachse übertragenen horizontalen Kräften entspricht, zugeordnet ist.

3. Verfahren nach Anspruch 1 oder 2, bei dem der Winkel der Neigung ($\alpha$) der Fahrbahn mittels eines Längsbeschleunigungssensors gemessen wird und der Überhöhungswinkel ($\theta$) der Fahrbahn mittels eines Querbeschleunigungssensors gemessen wird.

4. Verfahren nach einem der vorangehenden Ansprüche, bei dem die auf die Vorderachse (Fz1) ausgeübte vertikale Kraft und die auf die Hinterachse (Fz2) ausgeübte vertikale Kraft mittels Federwegsensoren und/oder Ultraschallsensoren gemessen werden.

5. Verfahren nach einem der vorangehenden Ansprüche, bei dem das Fahrzeug ein Kraftfahrzeug oder ein Eisenbahnwaggon oder ein Wagen oder ein Hebegerät ist.

6. Fahrzeug, umfassend eine Vorderachse und eine Hinterachse, Mittel zur Messung des Winkels der Neigung ($\alpha$) der Fahrbahn, auf der sich das Fahrzeug befindet, Mittel zur Messung des Überhöhungswinkels ($\theta$) der genannten Fahrbahn, Mittel zur Messung der vertikalen Kraft, die auf die Vorderachse des Fahrzeugs (Fz1) und auf die Hinterachse des Fahrzeugs (Fz2) ausgeübt wird, **dadurch gekennzeichnet, dass** es eine Berechnungseinheit umfasst, um Folgendes zu berechnen:

   - einen ersten Parameter, der gleich der Summe der auf die Vorderachse ausgeübten vertikalen Kraft und der auf die Hinterachse ausgeübten vertikalen Kraft ist,
   - einen zweiten Parameter, der die Fahrbahn repräsentiert, ausgehend vom gemessenen Winkel der Neigung der Fahrbahn, dem gemessenen Überhöhungswinkel und einem Koeffizienten (K), der den auf die Hinterachse übertragenen horizontalen Kräften entspricht, und
   - eine Division des ersten Parameters durch den zweiten Parameter, um daraus die Masse des Fahrzeugs zu ermitteln.

7. Fahrzeug nach Anspruch 6, bei dem die Berechnungseinheit in der Lage ist, die Summe der auf die Vorderachse ausgeübten vertikalen Kraft und der auf die Hinterachse ausgeübten vertikalen Kraft, und eine Division der Summe durch das Produkt der Gravitationsbeschleunigung, des Cosinus des Überhöhungswinkels und der Differenz des Cosinus des Überhöhungswinkels und des Sinus des Winkels der Neigung, wobei dem Winkel der Neigung ein Koeffizient, der den auf die Hinterachse übertragenen horizontalen Kräften entspricht, zugeordnet ist, zu berechnen.

8. Fahrzeug nach Anspruch 6 oder 7, bei dem die Mittel zur Messung des Winkels der Neigung ($\alpha$) der Fahrbahn einen Längsbeschleunigungssensor umfassen und die Mittel zur Messung des Überhöhungswinkels ($\theta$) der Fahrbahn einen Querbeschleunigungssensor umfassen.

9. Fahrzeug nach einem der Ansprüche 6 bis 8, bei dem die Mittel zur Messung der auf die Vorderachse (Fz1) ausgeübten vertikalen Kraft und die Mittel zur Messung der auf die Hinterachse (Fz2) ausgeübten vertikalen Kraft Federwegsensoren und/oder Ultraschallsensoren umfassen.

10. Fahrzeug nach einem der Ansprüche 6 bis 9, bei dem das Fahrzeug ein Kraftfahrzeug oder ein Eisenbahnwaggon oder ein Wagen oder ein Hebegerät ist.

**Claims**

1. Method for determining the weight of a vehicle (1) equipped with a front end assembly and a rear end assembly, the method comprising measuring the angle of the slope ($\alpha$) of the surface (2) on which the vehicle is, measuring the cant angle ($\theta$) of said surface, measuring the vertical force (Fz1, Fz2) exerted on the front end assembly of the vehicle and on the rear end assembly of the vehicle, **characterized in that** it comprises:

   - calculating a first parameter equal to the sum of the vertical force exerted on the front end assembly and of the vertical force exerted on the rear end assembly;
   - calculating a second parameter representative of the surface from the measured angle of the slope of the surface, from the measured cant angle and from a coefficient dependent on what is called the "Brouilhet effect" in French, corresponding to the horizontal forces transmitted to the rear end assembly; and
   - dividing the first parameter by the second parameter in order to deduce therefrom the weight of the vehicle.

2. Method according to Claim 1, comprising calculating the sum of the vertical force exerted on the front end assembly and of the vertical force exerted on the rear end assembly, and dividing the sum by the product of the acceleration due to gravity, of the cosine of the cant angle ($\theta$) and of the difference between the cosine and the sine of the angle of the slope ($\alpha$), the sine being assigned a coefficient corresponding to the horizontal forces transmitted to the rear end assembly.

3. Method according to Claim 1 or 2, wherein the angle of the slope ($\alpha$) of the surface is measured by means of a longitudinal accelerometer and the cant angle ($\theta$) of the surface is measured by means of a transverse accelerometer.

4. Method according to any one of the preceding claims, wherein the vertical force (Fz1) exerted on the front end assembly is measured and the vertical force (Fz2) exerted on the rear end assembly is measured by means of wheel-clearance sensors and/or ultrasound sensors.

5. Method according to any one of the preceding claims, wherein the vehicle is an automotive vehicle or a railway carriage or a trolley or a forklift truck or a lifting apparatus.

6. Vehicle comprising a front end assembly and a rear end assembly, means for measuring the angle of the slope ($\alpha$) of the surface on which the vehicle is, means for measuring the cant angle ($\theta$) of said surface, means for measuring the vertical force (Fz1, Fz2) exerted on the front end assembly of the vehicle and on the rear end assembly of the vehicle, **characterized in that** it comprises a computational unit for calculating:

   - a first parameter equal to the sum of the vertical force exerted on the front end assembly and of the vertical force exerted on the rear end assembly;
   - a second parameter representative of the surface from the measured angle of the slope of the surface, from the measured cant angle and from a coefficient (K) corresponding to the horizontal forces transmitted to the rear end assembly; and
   - dividing the first parameter by the second parameter in order to deduce therefrom the weight of the vehicle.

7. Vehicle according to Claim 6, wherein the computational unit is able to calculate the sum of the vertical force exerted on the front end assembly and of the vertical force exerted on the rear end assembly, and to divide the sum by the product of the acceleration due to gravity, of the cosine of the cant angle and of the difference between the cosine of the cant angle and the sine of the angle of the slope, the angle of the slope being assigned a coefficient corresponding to the horizontal forces transmitted to the rear end assembly.

8. Vehicle according to Claim 6 or 7, wherein the means for measuring the angle of the slope ($\alpha$) of the surface comprise a longitudinal accelerometer and the means for measuring the cant angle ($\theta$) of the surface comprise a transverse accelerometer.

9. Vehicle according to any one of Claims 6 to 8, wherein the means for measuring the vertical force (Fz1) exerted on the front end assembly and the means for measuring the vertical force (Fz2) exerted on the rear end assembly comprise wheel-clearance sensors and/or ultrasound sensors.

10. Vehicle according to any one of Claims 6 to 9, wherein the vehicle is an automotive vehicle or a railway carriage or a trolley or a forklift truck or a lifting apparatus.

# FIG.1

E01

E03

| Mesure de l'accélération longitudinale | Mesure du débattement | Raideur des suspensions |
|---|---|---|

Traitement — E04

| Calcul de la pente | Calcul des masses aux trains avant et arriére |
|---|---|

E02

E05

Coefficient de compensation

Compensation

E06

Masse

# FIG.2

# FIG.3

# FIG.4

**EP 2 893 308 B1**

## RÉFÉRENCES CITÉES DANS LA DESCRIPTION

### Documents brevets cités dans la description

- US 4691792 A